(19) Europäisches Patentamt
European Patent Office
Office européen des brevets

(11) **EP 4 697 161 A1**

(12) **EUROPEAN PATENT APPLICATION**
published in accordance with Art. 153(4) EPC

(43) Date of publication:
**18.02.2026 Bulletin 2026/08**

(21) Application number: **24925128.1**

(22) Date of filing: **26.06.2024**

(51) International Patent Classification (IPC):
*G06F 8/41* (2018.01)

(86) International application number:
**PCT/CN2024/101597**

(87) International publication number:
**WO 2026/000238 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **VeriSilicon Microelectronics (Shanghai) Co., Ltd.
Shanghai 201203 (CN)**
• **VeriSilicon Microelectronics (Chengdu) Co., Ltd.
Chengdu, Sichuan 610041 (CN)**

(72) Inventors:
• **YANG, Hongxiao
Shanghai 201203 (CN)**
• **YU, Tingting
Shanghai 201203 (CN)**
• **LIN, Shuxi
Shanghai 201203 (CN)**
• **ZHANG, Ke
Shanghai 201203 (CN)**

(74) Representative: **Bryn Aarflot AS
Patent
Stortingsgata 8
0161 Oslo (NO)**

(54) **DEAD CODE OPTIMIZATION METHOD FOR COMPILER, AND COMPILER, PROCESSOR AND ELECTRONIC DEVICE**

(57) The present invention provides an invalid code optimization method for a compiler, a processor, and an electronic device, relating to the field of compilation. The invalid code optimization method for a compiler includes: obtaining an invalid input parameter from an input parameter of a to-be-optimized code; determining an invalid code from the to-be-optimized code based on the invalid input parameter; and optimizing the invalid code to reduce the number of machine codes generated by the compiler when compiling the optimized code. The above invalid code optimization method for a compiler can simplify program code and improve code execution efficiency.

FIG. 1

EP 4 697 161 A1

## Description

## TECHNICAL FIELD

The present invention relates to the field of compilation, and more specifically, relates to an invalid code optimization method for a compiler, a compiler, a processor, and an electronic device.

## BACKGROUND ART

During compilation, a compiler converts source code into intermediate code and then converts the intermediate code into machine code. Currently, within the intermediate code generated by the compiler, there exist some codes that are used and the end result of the execution of these codes has no effect, which means that these codes are invalid codes. Invalid code occupies certain resources and affects the efficiency of code execution. Therefore, it is necessary to eliminate invalid code in the code segments to improve the efficiency of code execution.

## SUMMARY

The objective of the present invention is to provide an invalid code optimization method for a compiler, a compiler, a processor, an electronic device, and a storage medium to simplify program code and improve code execution efficiency.

In a first aspect, the embodiment of the present invention provides an invalid code optimization method for a compiler, including: obtaining an invalid input parameter from an input parameter of a to-be-optimized code; determining an invalid code from the to-be-optimized code based on the invalid input parameter; and optimizing the invalid code to reduce the number of machine codes generated by the compiler when compiling the optimized code.

When compiling, the compiler first converts a source code into an intermediate code and then converts the intermediate code into the machine code. In the embodiment of the present invention, the to-be-optimized code is the intermediate code. Starting from the invalid input parameter in the input parameter, the invalid code in the to-be-optimized code is determined through the invalid input parameter, and then the invalid code is optimized, thereby reducing the number of machine codes converted by the compiler based on the intermediate code and further reducing the number of machine codes. Therefore, this achieves the objective of simplifying program code and improving code execution efficiency.

In one embodiment, the step of obtaining an invalid input parameter from an input parameter of a to-be-optimized code includes: obtaining all input parameters of the to-be-optimized code and a resource layout; comparing all the input parameters with the resource layout, and if any input parameter is not used in the resource layout, determining the input parameter as an invalid input parameter.

In the embodiment of the present invention, by comparing the input parameters with the resource layout, unused input parameters can be identified. The unused input parameters and their related code, even if optimized, do not affect the normal operation and result output of the program code. Therefore, input parameters not used in the resource layout can be determined as invalid input parameters, and invalid code can be identified and optimized to improve code execution efficiency.

In one embodiment, the step of determining an invalid parameter from the input parameters includes: obtaining all input parameters of the to-be-optimized code; and determining, if any input parameter is undefined or a value of any input parameter is invalid, the input parameter as the invalid input parameter.

If the input parameter is invalid or undefined, and even if such input parameters are involved in the code, the code after execution will not affect the final output result. The code involving the input parameters is thus an invalid code. Therefore, in the embodiment of the present invention, undefined input parameters or input parameters with invalid values can be determined as invalid input parameters, and the corresponding invalid code can be determined and optimized to improve code execution efficiency.

In one embodiment, the step of determining an invalid code from the to-be-optimized code based on the invalid input parameters includes: determining an invalid code from the to-be-optimized code based on the invalid input parameters and a definition-use chain.

The definition-use chain is a commonly used data structure in compilers and is constructed inherently. In the embodiment of the present invention, the analysis is based directly on the data structure of the definition-use chain without requiring significant additional time to generate and use other data structures. Therefore, in the embodiment of the present invention, using the definition-use chain to determine invalid code can effectively improve the efficiency of determining invalid code.

In one embodiment, the step of determining an invalid code from the to-be-optimized code based on the invalid input parameters and a definition-use chain includes: listing all invalid input parameters as to-be-analyzed data in an analysis queue; determining, for any to-be-analyzed data in the analysis queue, a target code using the to-be-analyzed data from all the to-be-optimized codes based on a use and a definition of the to-be-analyzed data; determining, if the target code only includes the definition of the invalid input parameter, the target code as invalid code; listing the invalid code as new to-be-analyzed data in the analysis queue; and repeating the above process of analyzing and determining invalid code until all to-be-analyzed data in the analysis queue have been analyzed to obtain all the invalid codes.

In the embodiment of the present invention, invalid input parameters and invalid code are listed as to-be-analyzed data in the analysis queue. Each time an invalid code is determined, it is listed in the analysis queue for analysis. By repeating the analysis multiple times until all data in the analysis queue have been analyzed, invalid code can be determined more comprehensively, thus reducing omissions. Based on the use and definition of the to-be-analyzed data, determining whether it is an invalid code does not require traversing all the codes, which can improve the efficiency of determining an invalid code. Since to-be-analyzed data can have multiple definitions in the code, if one definition cannot be used, other definitions can still be used to ensure correct code execution, which could still affect the final output result. Therefore, if the target code only includes the definition of invalid input parameters, the target code is then determined as the invalid code to reduce abnormal code execution issues caused by code optimization.

In one embodiment, the step of optimizing the invalid code includes: deleting the invalid code.

In the embodiment of the present invention, since invalid code does not affect the output result, the invalid code can be directly deleted to improve code execution efficiency.

In one embodiment, the step of optimizing the invalid code further includes: generating, if any invalid code includes an output parameter, a code that is identical to the invalid code and modifying a value of the output parameter to 0 after deleting the invalid code.

Since it is impossible to determine how the output parameter will be used later in the program segment, in the embodiment of the present invention, to ensure the correct execution of the program flow, the code including the output parameter can be regenerated and the output parameter is set to an initial value of 0, so that the optimized code can function correctly.

In one embodiment, the step of optimizing the invalid code further includes: retaining, if any invalid code includes an output parameter, the invalid code and assigning the output parameter in the invalid code a value of 0; and deleting, if the invalid code does not include output parameter, the invalid code.

Since it is impossible to determine how the output parameter will be used later in the program segment, in the embodiment of the present invention, to ensure the correct execution of the program flow, the invalid output parameter cannot be deleted directly but the output parameter is set to an initial value of 0, so that the optimized code can function correctly.

In one embodiment, the step of optimizing the invalid code includes: assigning the invalid input parameter a value of 0, and substituting the invalid input parameter into the invalid code for constant folding.

In the embodiment of the present invention, constant folding can reduce the amount of code without affecting the normal operation of the code, thereby improving code execution efficiency.

In a second aspect, the embodiment of the present invention also provides a compiler, including: an acquisition module, configured for obtaining an invalid input parameter from an input parameter of a to-be-optimized code; an invalid code analysis module, configured for determining an invalid code from the to-be-optimized code based on the invalid input parameter; and an optimization module, configured for optimizing the invalid code to reduce the number of machine codes generated by the compiler when compiling the optimized code.

In a third aspect, the embodiment of the present invention also provides a processor, including a processing unit and a storage unit, wherein the processing unit is connected to the storage unit; the storage unit stores a program that, when executed on the processing unit, performs the code optimization method as described in any one of the first aspect or configures the compiler as described in the second aspect.

In the fourth aspect, the embodiment of the present invention further provides an electronic device, including the processor as described in the third aspect.

## BRIEF DESCRIPTION OF DRAWINGS

In order to more clearly illustrate the technical solutions of the embodiments of the present invention, the following will briefly introduce the drawings used in the embodiments of the present invention. It should be understood that the following drawings only show some embodiments of the present invention, and therefore it should not be regarded as a limitation on the scope. Those ordinary skilled in the art can also obtain other related drawings based on these drawings without inventive effort.

FIG. 1 is a flowchart of an invalid code optimization method provided by an embodiment of the present invention;
FIG. 2 is a schematic diagram of constant folding provided by an embodiment of the present invention;
FIG. 3 is a schematic diagram of code deletion provided by an embodiment of the present invention; and
FIG. 4 is a schematic diagram of a compiler provided by an embodiment of the present invention.

Reference numerals: compiler- 400; acquisition module- 410; invalid code analysis module- 420; optimization module- 430.

## DETAILED DESCRIPTION OF EMBODIMENTS

In order to make the objective, technical solutions, and advantages of the embodiments of the present invention clearer and more understandable, the present invention is described in further detail hereinafter in conjunction with the accompanying drawings and embodiments. It should be understood that the specific embodiments described herein are for the sole purpose of explaining the present invention and are not intended to limit the present invention.

Before explaining the solution of the present invention, the existing code optimization methods are explained first. For example, DCE (Dead Code Elimination) technology is commonly used in the prior art. DCE is a mature compiler optimization technology used to find and remove unused code segments, reduce unnecessary code and resource allocation, and improve code execution efficiency. DCE technology typically determines the code that needs to be optimized through output variables. For example, it identifies active variables at an exit of the program segment, then iteratively finds all active variables and code from the end to the beginning to determine the code paths contributing to the final result, and deletes the unused code segments.

While the DCE technology in the prior art can optimize some codes, there will still be parts of the code that are invalid. For example, during the execution of the code in the program segment, some codes will be used and are active code. However, these codes do not affect the output result, and their operations are ineffective. Thus, such code can also be determined as invalid code and then be optimized. For example, some input parameters of the code are invalid input parameters. The code generated by the compiler based on the invalid input parameters does not affect the output result, so the code generated based on the invalid input parameters is also invalid code.

Therefore, the embodiment of the present invention is to determine invalid code that cannot be determined in the prior art. By starting from the input parameters and determining the invalid code through invalid input parameters, it has a different perspective from the prior art.

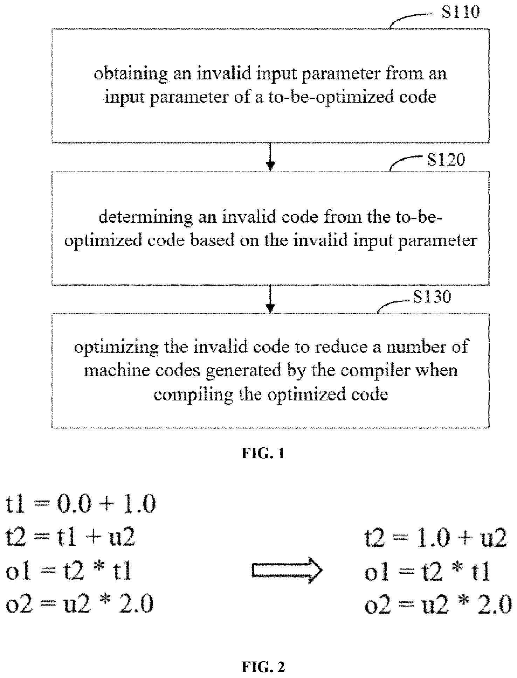

Referring to FIG. 1, FIG. 1 is a flowchart of an invalid code optimization method provided by an embodiment of the present invention, wherein the invalid code optimization method includes the following steps.

S110: obtaining an invalid input parameter from an input parameter of a to-be-optimized code.

When compiling, the compiler first converts the source code into intermediate code, and then converts the intermediate code into machine code. In the embodiment of the present invention, the to-be-optimized code is the intermediate code obtained by the compiler converting the source code. The to-be-optimized code includes an input parameter (or input variable) and an output parameter (or output variable). The invalid input parameter and its related code do not affect the output result. Therefore, in the embodiment of the present invention, the invalid input parameter of the input parameter of the to-be-optimized code can be obtained, and the invalid code can be determined through the invalid input parameter.

Different to-be-optimized codes can have different input parameters. For example, in an image pipeline, Uniforms are constants used in shader programs that can pass information such as transformation matrices and lighting parameters. During code optimization, Uniforms can be used as input parameters for the current compilation program segment.

Although different to-be-optimized codes can have different input parameters, the invalid input parameters generally have similar characteristics. For instance, the invalid input parameters can be input parameters that are undefined or have invalid parameter values. Therefore, in the embodiment of the present invention, all input parameters of the to-be-optimized code can be obtained first. If any input parameter is undefined or if the value of any input parameter is invalid, the input parameter is determined to be an invalid input parameter.

For example, in some codes, if some input parameters are not assigned corresponding parameter values, it indicates that the input parameters are undefined. Correspondingly, the input parameters can be determined to be invalid input parameters. Another example is that in some codes, floating-point numbers are invalid values. If the value of any input parameter is a floating-point number, the input parameter is an invalid input parameter. Different types of codes have different ways of defining input parameters and different requirements for the values of input parameters, which are not further detailed here.

In some embodiments, some codes can use hardware to perform corresponding functions, such as calling registers to store data. Therefore, during code execution, it is also possible to determine whether an input parameter is invalid based on the hardware usage condition.

In one embodiment, the step of obtaining an invalid input parameter from an input parameter of a to-be-optimized code can include: obtaining all input parameters of the to-be-optimized code and a resource layout; comparing all the input parameters with the resource layout, and if any input parameter is not used in the resource layout, determining the input parameter as an invalid input parameter.

In the embodiment, the resource layout (Layout) includes the usage conditions of different input parameters. For example, the resource layout includes the allocation of registers for each Uniform. Unused input parameters refer to the input parameters that are not allocated corresponding hardware resources. For example, no register is assigned to the input parameters, although the to-be-optimized code still includes code involving the input parameters.

In graphics, the compiler is used in two stages: compilation and linking. During the compilation stage, the information of Uniforms is obtained first. In the subsequent linking process, the information segment of the resource layout (Layout) is passed to the compiler by the rendering driver so that the compiler can allocate registers for the Uniforms. Therefore, in the embodiment of the present invention, all input parameters of the to-be-optimized code can be obtained during the compilation stage, and the resource layout can be obtained during the linking stage.

The resource layout includes the usage function conditions of different input parameters. Therefore, all input parameters can be compared with the resource layout to identify unused input parameters and determine them as invalid input parameters.

The above method of determining invalid input parameters is only part of the examples provided by the present invention; in practice, there can be other methods which are not further detailed here.

S120: determining an invalid code from the to-be-optimized code based on the invalid input parameter.

In the embodiment of the present invention, all the to-be-optimized codes can be sequentially traversed, and the code involving invalid input parameters can be determined from the to-be-optimized code, such as code including invalid parameters, or code where part of the data is determined by values related to invalid input parameters. After obtaining the code involving invalid input parameters, it can be determined whether the code is invalid. If the code does not affect the output result, it can be determined to be invalid.

In one embodiment of the present invention, the invalid code can be determined from the to-be-optimized code based on the invalid input parameters and the definition-use chain.

In compiler design, the DU-UD chain (Definition to Use-Use to Definition, definition-use chain) is involved. The DU-UD chain includes the relationship between the definition and use of variables in the program code. DU represents "Definition to Use," which refers to the path from the definition of one variable to one or more uses of the variable. UD represents "Use to Definition," which refers to the path tracing back from the use of one variable to its most recent definition. Through the definition-use chain, the definitions and uses of different parameters can be quickly determined.

The definition-use chain is a commonly used data structure in compilers and is constructed inherently by the compilers. In the embodiment of the present invention, the analysis is based directly on the data structure of the definition-use chain without requiring significant additional time to generate and use other data structures. Therefore, in the embodiment of the present invention, using the definition-use chain to determine invalid code can effectively improve the efficiency of determining invalid code.

For example, the program segments are: int x = 10; int y = x + 1; x = 20; int z = y + 1. In the program segment, int x = 10 is a definition point for the variable x; y = x + 1 is a usage point for the variable x; x = 20 is another definition point for x; and int z = y + 1 is a usage point for the variable y. The compiler, by analyzing the definitions and usage relationships, can determine the paths from the definition of each invalid input parameter to its usage and then identify the invalid code.

In the embodiment of the present invention, the process of determining an invalid code from the to-be-optimized code based on the invalid input parameters and a definition-use chain includes: listing all invalid input parameters as to-be-analyzed data in an analysis queue; determining, for any to-be-analyzed data in the analysis queue, a target code using the to-be-analyzed data from all the to-be-optimized codes; determining, if the target code only includes the definition of invalid input parameter, the target code as invalid code; listing the invalid code as new to-be-analyzed data in the analysis queue; and repeating the above process of analyzing and determining invalid code until all to-be-analyzed data in the analysis queue have been analyzed to obtain all the invalid codes.

The analysis queue is used to list all the data that needs to be analyzed for validity. For example, in the first round of analysis, all invalid input parameters are listed in the analysis queue for analysis to determine the invalid code. In subsequent rounds, the determined invalid code is listed in the analysis queue to further determine other invalid codes.

Additionally, for some parameters, there can be multiple definitions. For example, t3 can have two definitions: t3 = u2 * 2.0 and t3 = u3 * 2.0. If u2 is an invalid input parameter, then t3 = u2 * 2.0 is invalid code, and t3 = u3 * 2.0 is still valid. In this case, t3 can still be determined as valid.

For better understanding, an example is provided here for illustration. The input parameters include u1, u2, and u3, and the output parameters include o1, o2, and o3. The program segments are B1, B2, B3, and B4, where B1, B2, B3, and B4 are:

B1:

$$001: t1 = u1 + 1.0$$

$$002: t2 = u2 + 1.0$$

$$003: \text{If } t1 < 1 \text{ goto B3}$$

B2:

$$004: t3 = u2 * 2.0;$$

005: Goto B4
B3:

$$006: t3 = u3 * 2.0;$$

B4:

$$007: t4 = t2 + t3;$$

$$008: o1 = t1;$$

$$009: o2 = t3;$$

$$010: o3 = t4.$$

B1 is the starting code of the program segment and can accept input parameters, and B4 serves as the end of the program segment and returns output parameters.

First, if u2 is determined to be an invalid input parameter, u2 can be marked as invalid and listed in the analysis queue. At this point, the analysis queue is {input: u2}.

Then, the first element in the analysis queue {input: u2} is dequeued for analysis. Based on the usage information of u2, all instructions using u2 are found: 002: t2 = u2 + 1.0; and 004: t3 = u2 * 2.0.

Next, 002: t2 = u2 + 1.0 is analyzed: by looking up all definitions of u2, since it has only one definition (i.e., an input parameter) and the definition is an invalid value, the result of the instruction is also an invalid value. Thus, t2 is marked as invalid and listed in the analysis queue. The analysis queue now is {002: t2}. After each analysis of a to-be-analyzed data, the data can be removed from the analysis queue or not, and there is no restriction here.

Then, 004: t3 = u2 * 2.0 is analyzed. By looking up all definitions of u2, since it has only one definition and the definition is an invalid value, the result of the instruction is an invalid value. Thus, t3 is marked as invalid and listed in the analysis queue, thus obtaining {002: t2; 004: t3}.

Next, the to-be-analyzed data in the analysis queue {002: t2; 004: t3} are analyzed. Based on the usage information of 002: t2, all instructions using t2 are found: 007: t4 = t2 + t3. Then, 007: t4 = t2 +t3 is analyzed. By looking up all definitions of t2, since it has only one definition and the definition is an invalid value, the result of the instruction is an invalid value. Thus, t4 is marked as invalid and listed in the analysis queue {004: t3; 007: t4}.

The first element is dequeued from the analysis queue {004: t3; 007: t4} for analysis: according to the usage information of 004: t3 to find all instructions that use t3: 007: t4 = t2 + t3; and 009: o2 = t3; and 007: t4 = t2 + t3 is analyzed. The instruction has already been marked as invalid, so it is skipped. Then, 009: o2 = t3 is analyzed by looking up all definitions of t3, which include two definitions {004: t3 = u2 * 2.0; 006: t3 = u3 * 2.0}. Since {006: t3} has not been marked as invalid, o2 is not marked as invalid.

The first element in the analysis queue {007: t4} is dequeued for analysis. Based on the usage information of 007: t4, all instructions that use t4: 010: o3 = t4 are found. Then, 010: o3 = t4 is analyzed. By looking up all definitions of t4, since it has only one definition and the definition is an invalid value, the result of the instruction is an invalid value.

If the analysis queue is empty, the analysis ends, and all the invalid codes are obtained as: {002: t2; 004: t3; 007: t4; 010: o3}.

S130: optimizing the invalid code to reduce the number of machine codes generated by the compiler when compiling the optimized code.

In the embodiment of the present invention, the to-be-optimized code is the intermediate code obtained by the compiler converting the source code. The invalid code is part of the intermediate code. Optimizing the invalid code can reduce the amount of intermediate codes, and consequently, the number of machine codes generated by the compiler when compiling the intermediate codes.

In one embodiment of the present invention, optimizing the invalid code can be directly performed by deleting the invalid code.

However, in a program segment, it is not possible to determine whether the output parameters will be used later. Therefore, in one embodiment of the present invention, if the invalid code includes output parameters, the code is retained, and the output parameters are set to 0.

If any invalid code is to be deleted and the invalid code includes output parameters, then after deleting the invalid code, a new code identical to the invalid code can be generated, and the value of the output parameters can be modified to 0.

In some other embodiment, it can further include: retaining, if any invalid code includes the output parameter, the invalid code and assigning the output parameter in the invalid code a value of 0; and deleting, if the invalid code does not include output parameter, the invalid code.

Besides direct deletion, in other embodiments, code optimization can also be achieved through constant folding, which means that a value of 0 is assigned to the invalid input parameter and the invalid input parameter is substituted into the invalid code for constant folding.

The details of constant folding can refer to the prior art and will not be elaborated herein. For ease of understanding, an example is provided for illustration.

As shown in FIG. 2, the code segment is: t1 = u1 + 1.0; t2 = t1 + u2; o1 = t2 * t1; o2 = u2 * 2.0.

The input parameters are u1 and u2. It has been determined that u1 is an invalid input parameter. Correspondingly, u1 can be assigned a value of 0 and substituted into the original code segment, resulting in: t1 = 0 + 1.0; t2 = t1 + u2; o1 = t2 * t1; o2 = u2 * 2.0. After constant folding, the resulting code is: t2 = 1.0 + u2; o1 = t2 * t1; o2 = u2 * 2.0.

Taking the same code segment above as an example, the deletion method is explained as follows.

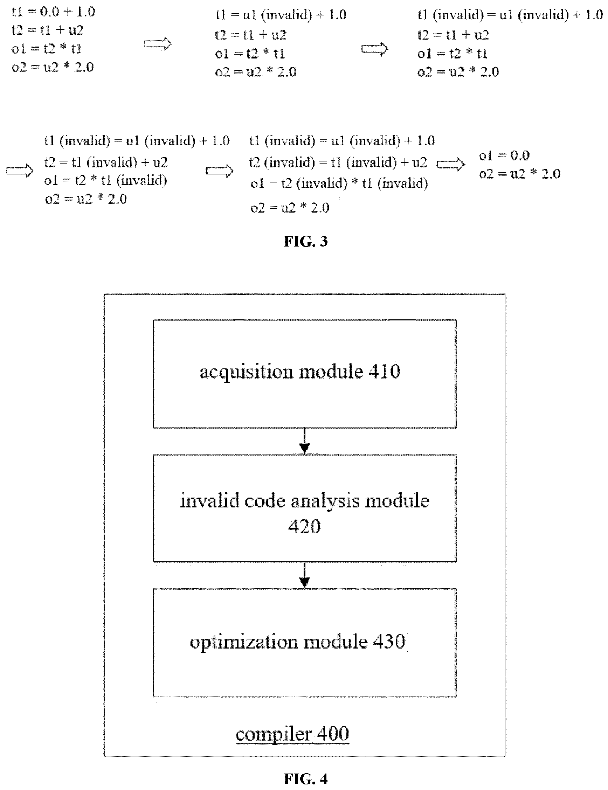

As shown in FIG. 3, initially: t1 = u1 (invalid) + 1.0; t2 = t1 + u2; o1 = t2 * t1; o2 = u2 * 2.0, where

it can be determined that t1 is invalid. Consequently, the code is: t1 (invalid) = u1 (invalid) + 1.0; t2 = t1 + u2; o1 = t2 * t1; o2 = u2 * 2.0.

Due to the invalidity of t1, the code becomes: t1 (invalid) = u1 (invalid) + 1.0; t2 = t1 (invalid) + u2; o1 = t2 * t1 (invalid); o2 = u2 * 2.0.

Further, it can be derived that: t1 (invalid) = u1 (invalid) + 1.0; t2 (invalid) = t1 (invalid) + u2; o1 = t2 (invalid) * t1 (invalid); o2 = u2 * 2.0.

Finally, the invalid code is deleted. Since o1 is an output parameter, it is assigned a value of 0, resulting in the optimized code: o1 = 0.0; o2 = u2 * 2.0.

Both the deletion and constant folding methods aforementioned can optimize the code, each with different effects. For example, in the above embodiment, after constant folding, the code retains 3 lines, keeping the code more intact. After deletion, 2 lines remain, achieving a more substantial code reduction. Both methods can optimize the code and can be chosen based on specific needs.

In the present invention embodiment, starting from the invalid input parameter in the input parameter, the invalid code in the to-be-optimized code is determined through the invalid input parameter, and then the invalid code is optimized to improve code execution efficiency. Unlike the existing method that identifies active code and variables from the exit of the program segment, the embodiment of the present invention provides a different method to determine invalid code, which not only optimizes the code but also can identify invalid code that the existing method cannot determine. Combining with the existing method, it can further optimize the invalid code and improve execution efficiency.

Based on the same inventive concept, the embodiments of the present invention also provide a compiler. Referring to FIG. 4, FIG. 4 is a schematic diagram of a compiler provided by an embodiment of the present invention. The compiler 400 includes: an acquisition module 410, an invalid code analysis module 420, and an optimization module 430.

The acquisition module 410 is configured for obtaining an invalid input parameter from an input parameter of a to-be-optimized code.

The invalid code analysis module 420 is configured for determining an invalid code from the to-be-optimized code based on the invalid input parameter.

The optimization module 430 is configured for optimizing the invalid code to reduce the number of machine codes generated by the compiler when compiling the optimized code.

The acquisition module 410 can be further configured for obtaining all input parameters of the to-be-optimized code and a resource layout; comparing all the input parameters with the resource layout; and determining, if any input parameter is not used in the resource layout, the input parameter as an invalid input parameter.

The acquisition module 410 can be further configured for obtaining all input parameters of the to-be-optimized code; and determining, if any input parameter is undefined or a value of any input parameter is invalid, the input parameter as the invalid input parameter.

The invalid code analysis module 420 can be further configured for determining an invalid code from the to-be-optimized code based on the invalid input parameters and a definition-use chain.

The invalid code analysis module 420 is specifically configured for listing all invalid input parameters as to-be-analyzed data in an analysis queue; determining, for any to-be-analyzed data in the analysis queue, a target code using the to-be-analyzed data from all the to-be-optimized codes; determining, if the target code only includes the definition of invalid input parameter, the target code as invalid code; listing the invalid code as new to-be-analyzed data in the analysis queue; and repeating the above process of analyzing and determining invalid code until all to-be-analyzed data in the analysis queue have been analyzed to obtain all the invalid codes.

The optimization module 430 can be further configured for deleting the invalid code.

The optimization module 430 can be further configured for generating, if any invalid code includes an output parameter, a code that is identical to the invalid code and modifying a value of the output parameter to 0 after deleting the invalid code.

The optimization module 430 can be further configured for retaining, if any invalid code includes the output parameter, the invalid code and assigning the output parameter in the invalid code a value of 0; and deleting, if the invalid code does not include output parameter, the invalid code.

The optimization module 430 can be further configured for assigning the invalid input parameter a value of 0, and substituting the invalid input parameter into the invalid code for constant folding.

Based on the same inventive concept, the embodiments of the present invention also provide a processor. The processor includes a processing unit and a storage unit, wherein the processing unit is connected to the storage unit. The storage unit stores a program that, when executed on the processing unit, performs the code optimization method as described in any one of the aforementioned embodiments or configures the compiler as described in any one of the aforementioned embodiments.

In the present invention embodiment, the processor can be a GPU (Graphics Processing Unit), CPU (Central Processing Unit), AI (Artificial Intelligence) data processing core, or other processor chips used in scenarios involving large-scale data computation. The above are examples only and should not be a limitation of the present invention.

Based on the same inventive concept, the embodiments of the present invention also provide an electronic device, wherein the electronic device can include the processor described in the previous embodiment.

The technical features of the above embodiments can be freely combined without conflict, and the resulting embodiments are encompassed within the scope of the present invention.

The above is only a specific embodiment of the present invention, but the scope of protection of the present invention is not limited thereto. Any person skilled in the art can easily envisage changes or substitutions within the technical scope disclosed in the present invention, which should be encompassed within the scope of protection of the present invention. Therefore, the scope of protection of the present invention shall be stated to be subject to the scope of protection of the claims.

It should be noted that the terms "comprise", "include", or any other variations herein are intended to encompass non-exclusive inclusion. This means that processes, methods, items, or devices that include a series of elements not only contain those elements explicitly listed but also contain other elements that are not explicitly mentioned or inherently part of such processes, methods, items, or devices. In the absence of further limitations, the inclusion of an element specified by the phrase "comprising a..." does not exclude the presence of additional identical elements in the process, method, article, or apparatus that includes the specified element.

**Claims**

1. An invalid code optimization method for a compiler, **characterized by** comprising

   obtaining an invalid input parameter from an input parameter of a to-be-optimized code;
   determining an invalid code from the to-be-optimized code based on the invalid input parameter; and
   optimizing the invalid code to reduce the number of machine codes generated by the compiler when compiling an optimized code.

2. The method according to claim 1, wherein the step of obtaining an invalid input parameter from an input parameter of a to-be-optimized code comprises

   obtaining all input parameters of the to-be-optimized code and a resource layout; and
   comparing all the input parameters with the resource layout, and when any input parameter is not used in the resource layout, determining the input parameter as an invalid input parameter.

3. The method according to claim 1, wherein the step of obtaining an invalid input parameter from an input parameter of a to-be-optimized code comprises

   obtaining all input parameters of the to-be-optimized code; and
   determining, when any input parameter is undefined or a value of any input parameter is invalid, the input parameter as an invalid input parameter.

4. The method according to claim 1, wherein the step of determining an invalid code from the to-be-optimized code based on the invalid input parameter comprises determining the invalid code from the to-be-optimized code based on the invalid input parameter and a definition-use chain.

5. The method according to claim 4, wherein the step of determining the invalid code from the to-be-optimized code based on the invalid input parameter and a definition-use chain comprises

   listing all invalid input parameters as to-be-analyzed data in an analysis queue;
   determining, for any to-be-analyzed data in the analysis queue, a target code using the to-be-analyzed data from all to-be-optimized codes based on a use and a definition of the to-be-analyzed data;
   determining, when the target code only comprises a definition of the invalid input parameter, the target code as an invalid code;
   listing the invalid code as a new to-be-analyzed data in the analysis queue; and
   repeating the above process of analyzing and determining the invalid code until all to-be-analyzed data in the analysis queue have been analyzed to obtain all invalid codes.

6. The method according to any one of claims 1 to 5, wherein the step of optimizing the invalid code comprises deleting the invalid code.

7. The method according to claim 6, wherein the step of optimizing the invalid code further comprises generating, when any invalid code comprises an output parameter, a code that is identical to the invalid code and modifying a value of the output parameter to 0 after deleting the invalid code.

8. The method according to any one of claims 1 to 5, wherein the step of optimizing the invalid code comprises

   retaining, when any invalid code comprises an output parameter, the invalid code and assigning the output parameter in the invalid code a value of 0; and
   deleting, when the invalid code does not comprise the output parameter, the invalid code.

9. The method according to any one of claims 1 to 5, wherein the step of optimizing the invalid code comprises
assigning the invalid input parameter a value of 0, and substituting the invalid input parameter into the invalid code for constant folding.

10. A compiler, **characterized by** comprising

an acquisition module, configured for obtaining an invalid input parameter from an input parameter of a to-be-optimized code;
an invalid code analysis module, configured for determining an invalid code from the to-be-optimized code based on the invalid input parameter; and
an optimization module, configured for optimizing the invalid code to reduce the number of machine codes generated by the compiler when compiling an optimized code.

11. A processor, comprising a processing unit and a storage unit, **characterized in that** the processing unit is connected to the storage unit; the storage unit stores a program that, when executed on the processing unit, performs the invalid code optimization method for the compiler according to any one of claims 1 to 9 or configures the compiler according to claim 10.

12. An electronic device, **characterized by** comprising the processor according to claim 11.

S110

obtaining an invalid input parameter from an
input parameter of a to-be-optimized code

S120

determining an invalid code from the to-be-
optimized code based on the invalid input parameter

S130

optimizing the invalid code to reduce a number of
machine codes generated by the compiler when
compiling the optimized code

**FIG. 1**

$$t1 = 0.0 + 1.0$$
$$t2 = t1 + u2$$
$$o1 = t2 * t1$$
$$o2 = u2 * 2.0$$

$\implies$

$$t2 = 1.0 + u2$$
$$o1 = t2 * t1$$
$$o2 = u2 * 2.0$$

**FIG. 2**

$t1 = 0.0 + 1.0$
$t2 = t1 + u2$
$o1 = t2 * t1$
$o2 = u2 * 2.0$

$\Longrightarrow$

$t1 = u1 \text{ (invalid)} + 1.0$
$t2 = t1 + u2$
$o1 = t2 * t1$
$o2 = u2 * 2.0$

$\Longrightarrow$

$t1 \text{ (invalid)} = u1 \text{ (invalid)} + 1.0$
$t2 = t1 + u2$
$o1 = t2 * t1$
$o2 = u2 * 2.0$

$\Longrightarrow$

$t1 \text{ (invalid)} = u1 \text{ (invalid)} + 1.0$
$t2 = t1 \text{ (invalid)} + u2$
$o1 = t2 * t1 \text{ (invalid)}$
$o2 = u2 * 2.0$

$\Longrightarrow$

$t1 \text{ (invalid)} = u1 \text{ (invalid)} + 1.0$
$t2 \text{ (invalid)} = t1 \text{ (invalid)} + u2$
$o1 = t2 \text{ (invalid)} * t1 \text{ (invalid)}$
$o2 = u2 * 2.0$

$\Longrightarrow$

$o1 = 0.0$
$o2 = u2 * 2.0$

**FIG. 3**

acquisition module 410

invalid code analysis module 420

optimization module 430

compiler 400

**FIG. 4**

## INTERNATIONAL SEARCH REPORT

| International application No. |
|---|
| **PCT/CN2024/101597** |

| A. | CLASSIFICATION OF SUBJECT MATTER |
|---|---|

G06F8/41(2018.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 无效, 无用, 死代码, 优化, 参数, 输入, 变量, 程序, 编译器, 删除, 定义使用连, UD链, DU链, invalid, useless, dead code, optimization, parameter, input, variable, program, compiler, delete, UD-DU chain, UD chain, DU chain

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115544063 A (TIANYI DIGITAL LIFE TECHNOLOGY CO., LTD.) 30 December 2022 (2022-12-30) <br> description, paragraphs 0004-0041 | 1-4, 6-12 |
| A | CN 107358099 A (NANJING UNIVERSITY OF POSTS AND TELECOMMUNICATIONS) 17 November 2017 (2017-11-17) <br> entire document | 1-12 |
| A | CN 112416416 A (PING AN PUHUI ENTERPRISE MANAGEMENT CO., LTD.) 26 February 2021 (2021-02-26) <br> entire document | 1-12 |
| A | CN 115114624 A (SANGFOR TECHNOLOGIES INC.) 27 September 2022 (2022-09-27) <br> entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 November 2024** | **09 December 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/101597**

| Patent document cited in search report | | | Publication date (day/month/year) | Patent family member(s) | Publication date (day/month/year) |
|---|---|---|---|---|---|
| CN | 115544063 | A | 30 December 2022 | None | |
| CN | 107358099 | A | 17 November 2017 | None | |
| CN | 112416416 | A | 26 February 2021 | None | |
| CN | 115114624 | A | 27 September 2022 | None | |

Form PCT/ISA/210 (patent family annex) (July 2022)